(19) **Europäisches Patentamt / European Patent Office / Office européen des brevets**

(11) **EP 4 769 987 A1**

(12) **EUROPEAN PATENT APPLICATION**
published in accordance with Art. 153(4) EPC

(43) Date of publication:
01.07.2026 Bulletin 2026/27

(21) Application number: 24868431.8

(22) Date of filing: 05.07.2024

(51) International Patent Classification (IPC):
H04L 1/00 (2006.01)        H04W 72/512 (2023.01)
H04L 1/20 (2006.01)        H04L 1/1812 (2023.01)
H04B 17/336 (2015.01)

(52) Cooperative Patent Classification (CPC):
H04B 17/336; H04L 1/00; H04L 1/18; H04L 1/1812;
H04L 1/20; H04W 72/512

(86) International application number:
PCT/KR2024/009573

(87) International publication number:
WO 2025/063448 (27.03.2025 Gazette 2025/13)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 21.09.2023 KR 20230126524

(71) Applicants:
• SAMSUNG ELECTRONICS CO., LTD.
Yeongtong-gu
Suwon-si, Gyeonggi-do 16677 (KR)
• UIF (University Industry Foundation), Yonsei
University
Seoul 03722 (KR)

(72) Inventors:
• KIM, Jeongchan
Suwon-si, Gyeonggi-do 16677 (KR)
• JANG, Suhwan
Seoul 03722 (KR)
• KIM, Taehyung
Suwon-si, Gyeonggi-do 16677 (KR)
• KU, Sungmo
Seoul 03722 (KR)
• LEE, Chungyong
Seoul 03722 (KR)
• IM, Chaehun
Seoul 03722 (KR)

(74) Representative: Gulde & Partner
Patent- und Rechtsanwaltskanzlei mbB
Berliner Freiheit 2
10785 Berlin (DE)

(54) **METHOD AND APPARATUS FOR LINK ADAPTATION IN WIRELESS COMMUNICATION SYSTEM**

(57) A link adaptation method according to an embodiment of the present disclosure is a method performed by a base station in a wireless communication system and comprises the operations of: transmitting first URLLC data to a user equipment (UE) on the basis of a first time resource and a first frequency resource; transmitting a padding signal to the UE on the basis of a second time resource and the first frequency resource; receiving a first hybrid automatic repeat request (HARQ) signal for the padding signal from the UE; generating a block error rate (BLER) value; generating a correction constant for a signal-to-interference-plus-noise ratio (SINR) on the basis of the BLER value; correcting an outer loop rate control (OLRC) offset on the basis of the first HARQ signal; correcting the SINR on the basis of the corrected OLRC offset and the correction constant; and on the basis of a modulation and coding scheme (MCS) determined on the basis of the corrected SINR, transmitting second URLLC data to the UE on the basis of a third time resource and the first frequency resource.

FIG.1

Processed by Luminess, 75001 PARIS (FR)

**Description**

[Technical Field]

The disclosure relates to a method and an apparatus for link adaptation in a wireless communication system and, particularly, to a method and an apparatus for controlling a transmission method, based on a channel state of a radio environment.

[Background Art]

A channel refers to a value representing a signal change characteristic between a base station and a user equipment (UE) in a wireless communication environment, and may be determined by various factors such as the movement of the UE, an obstacle, multiple paths, and an occurrence of an abrupt interference signal. Since a radio channel changes over time, it is difficult to use a fixed transmission scheme to meet a service quality, and this may be handled through a scheme called link adaptation. In the link adaptation process, the base station may first periodically receive a channel quality indicator (CQI) having quantized received signal-to-interference-plus-noise ratio (SINR) information from the UE, process the same, and detect a channel state. Thereafter, the base station may select an MCS for satisfying a target communication service quality, based on the detected channel state and then transmit data using the same.

In this regard, as one link adaptation scheme, an inner loop rate control (ILRC) technique may determine an MCS by using only periodically transmitted CQIs, but this cannot reflect channel state changes between transmitted CQI periods. As a method for complementing the ILRC, an outer loop rate control (OLRC) scheme may allow the base station to use hybrid automatic repeat request (HARQ) response information, which is fed back from the UE along with the CQI at every TTI.

The HARQ signal is a signal indicating whether there is an error in a transport block transmitted from the base station, and the UE may feedback an ACK signal to the base station when the transport block is received without an error and feedback a NACK signal when there is an error. The UE may receive data in units of transport blocks modified according to the MCS from the base station, and may perform a cyclic redundancy check (CRC) on each of the received blocks to determine whether there is an error and transmit the HARQ signal to the base station. A general outer loop rate control scheme may correct an OLRC offset value by using HARQ feedback and modify an SINR estimated from a CQI. The OLRC offset may increase or decrease by a specific value according to the state (ACK/NACK) of the HARQ feedback, and the OLRC offset value may be used to update the estimated SINR. Ultimately, the result of updating the estimated SINR is changed depending on the state of the HARQ feedback, and accordingly, the base station may determine the MCS and transmit data adaptively to the channel state.

In the case of ultra reliable low latency communication (URLLC) data, the target error rate is very low. Therefore, it is required to, even though a rapid change in a channel environment is made, rapidly adapt thereto and manage the error rate for data, and there is a need for a technology therefor.

[Disclosure of Invention]

[Technical Problem]

An aspect of the disclosure is to provide a method and an apparatus for controlling so as to rapidly converge to a target error rate through link adaptation even though a channel state changes rapidly during data transmission and reception.

[Solution to Problem]

A method according to an embodiment of the disclosure is a method performed by a base station in a wireless communication system, and the method includes: transmitting first URLLC data to a user equipment (UE), based on a first time resource and a first frequency resource; transmitting a padding signal to the UE, based on a second time resource and the first frequency resources; receiving a first hybrid automatic repeat request (HARQ) signal for the padding signal from the UE; generating a block error rate (BLER) value; generating a correction constant for a signal-to-interference-plus-noise ratio (SINR), based on the BLER value; correcting an outer loop rate control (OLRC) offset, based on the first HARQ signal; correcting the SINR, based on the corrected OLRC offset and the correction constant; and based on a modulation and coding scheme (MCS) determined based on the corrected SINR, transmitting second URLLC data to the UE, based on a third time resource and the first frequency resource.

An apparatus according to an embodiment of the disclosure is a base station in a wireless communication system, and the apparatus includes: a transceiver, and a processor connected to the transceiver, wherein the processor is configured to: transmit first URLLC data to a user equipment (UE), based on a first time resource and a first frequency resource; transmit a padding signal to the UE, based on a second time resource and the first frequency resource; receive a first hybrid automatic repeat request (HARQ) signal for the padding signal from the UE; generate a block error rate (BLER) value; generate a correction constant for a signal-to-interference-plus-noise ratio (SINR), based on the BLER value; correct an outer loop rate control (OLRC) offset, based on the first HARQ signal; correct the SINR, based on the corrected OLRC offset and the correction constant; and based on a modulation and coding scheme (MCS) determined based on the corrected SINR, transmit second URLLC data to the UE, based on a third time resource and the first frequency resource.

[Advantageous Effects of Invention]

A method and an apparatus according to an embodiment of the disclosure may select an optimal modulation scheme and coding rate (modulation and coding scheme, MCS) to transmit data in order to support ultra-reliable and low latency communications (URLLC) in a wireless communication system (e.g., 5G NR system).

That is, the method and the apparatus according to an embodiment of the disclosure may quickly determine a channel state, determine an SINR update and an MCS, based on the determined channel state, and transmit URLLC data.

In addition, the method and the apparatus according to an embodiment of the disclosure may control a data transmission environment to rapidly converge to a target error ratio even if the channel state changes rapidly.

Advantageous effects obtainable from the disclosure may not be limited to the above-mentioned effects, and other effects which are not mentioned herein may be clearly understood from the following description by those skilled in the art to which the disclosure pertains.

[Brief Description of Drawings]

The features and advantages of an embodiment of the disclosure will be more apparent from the following description in conjunction with the accompanying drawings.

FIG. 1 illustrates traffic of URLLC data according to an embodiment of the disclosure.

FIG. 2 illustrates traffic of URLLC data and traffic of a padding signal according to an embodiment of the disclosure.

FIG. 3 illustrates a method according to an embodiment of the disclosure.

FIG. 4 illustrates a method performed by a UE according to an embodiment of the disclosure.

FIG. 5 illustrates a method performed by a base station according to an embodiment of the disclosure.

FIG. 6 illustrates a method performed by the base station according to an embodiment of the disclosure.

FIG. 7 is a graph illustrating a difference between a generated BLER and a target BLER according to an embodiment of the disclosure.

FIG. 8 illustrates a method of generating a correction constant for a SINR according to an embodiment of the disclosure.

FIG. 9 illustrates a method of generating the correction constant for the SINR according to an embodiment of the disclosure.

FIG. 10 is a graph illustrating a change in a BLER value according to an embodiment of the disclosure.

FIG. 11 is a graph illustrating the change in the BLER value according to an embodiment of the disclosure.

FIG. 12 is a graph illustrating the change in the BLER value according to an embodiment of the disclosure.

FIG. 13 is a graph illustrating the change in the BLER value according to an embodiment of the disclosure.

FIG. 14 is a graph illustrating the change in the BLER value according to an embodiment of the disclosure.

FIG. 15 is a graph illustrating the change in the BLER value according to an embodiment of the disclosure.

FIG. 16 is a graph illustrating the change in the BLER value according to an embodiment of the disclosure.

FIG. 17 is a graph illustrating the change in the BLER value according to an embodiment of the disclosure.

FIG. 18 illustrates components a UE according to an embodiment of the disclosure.

FIG. 19 illustrates components of a base station according to an embodiment of the disclosure.

[Mode for the Invention]

Embodiments of the disclosure may resolve the above-mentioned problems and/or disadvantages and provide advantages as described below. An aspect of the disclosure may provide a terminal and a communication method thereof in a wireless communication system.

The terms used in the disclosure are used merely to describe particular embodiments, and may not be intended to limit the scope of other embodiments. A singular expression may include a plural expression unless they are definitely different in a context. The terms used herein, including technical and scientific terms, may have the same meaning as those commonly understood by a person skilled in the art to which the disclosure pertains. Such terms as those defined in a generally used dictionary may be interpreted to have the meanings equal to the contextual meanings in the relevant field of art, and are not to be interpreted to have ideal or excessively formal meanings unless clearly defined in the disclosure. In some cases, even the term defined in the disclosure should not be interpreted to exclude embodiments of the disclosure.

Hereinafter, various embodiments of the disclosure will be described based on an approach of hardware. However, various embodiments of the disclosure include a technology that uses both hardware and software, and thus the various embodiments of the disclosure may not exclude the perspective of software.

Furthermore, various embodiments of the disclosure will be described using terms employed in some communication standards (e.g., the 3rd generation partnership project (3GPP)), but they are for illustrative purposes only. Various embodiments of the disclosure may also be easily applied to other communication systems through modifications.

Hereinafter, various embodiments of the disclosure will be described.

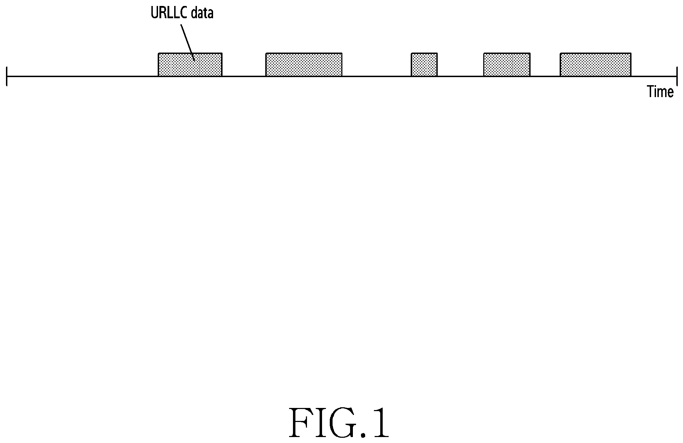

FIG. 1 illustrates traffic of URLLC data according to an embodiment of the disclosure.

Ultra reliable low latency communication (URLLC) is one of the key services provided in a 5G NR system, along with enhanced mobile broadband (eMBB) and massive machine-type communication (mMTC). URLLC may be used for services such as remote medical treatment, remote robot control, autonomous driving vehicles, and real-time interactive games. Since URLLC requires a very low delay rate and a high degree of reliability, a target block error rate (BLER) value may generally be in the range of $10^{-3}$ to $10^{-6}$.

Referring to FIG. 1, in a URLLC environment, a base station may intermittently transmit data in a small size (about 100 bytes). Therefore, for the empty interval in which no data is transmitted, the base station may not receive HARQ feedback from the UE and may not perform an outer-loop link adaptation (outer-loop rate control (OLRC)) operation. In a situation where the channel environment rapidly changes, a previously estimated signal-to-interference-plus-noise ratio (SINR) may not well reflect the current channel state, and thus, transmitting data based on the previously estimated SINR may reduce reliability in the URLLC environment requiring high reliability.

In addition, when a channel quality indicator (CQI) received from the UE by the base station is inaccurate or when the channel environment changes rapidly, the conventional outer-loop rate control (OLRC) method requires a long time to correct the estimated SINR to match the actual channel environment.

A method and an apparatus according to an embodiment of the disclosure may propose a method or an apparatus for maintaining high reliability in the URLLC environment and reducing the time required to reach a target error rate by correcting the SINR according to the actual channel environment.

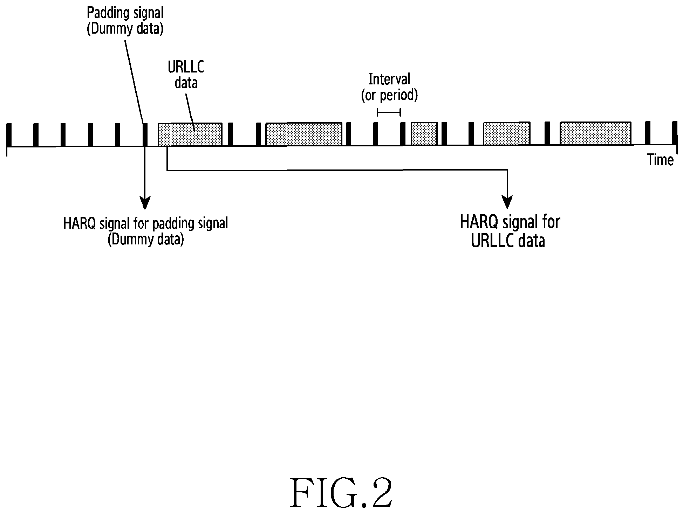

FIG. 2 is a diagram illustrating traffic of URLLC data and traffic of a padding signal according to an embodiment of the disclosure.

Referring to FIG. 2, URLLC data traffic may exist intermittently over time, and a padding signal may exist between URLLC data traffics.

That is, the base station may periodically transmit the padding signal to the user equipment (UE) in an interval between intermittently transmitted URLLC data. The UE may receive the padding signal from the base station, check an error in the padding signal, and then transmit a HARQ signal to the base station. The base station may update the ORLC offset, based on the received HARQ signal, and correct the SINR, based on the updated ORLC offset. The base station may determine an MCS, based on the corrected SINR, and transmit the URLLC data to the UE. That is, it may be understood that the base station transmits the padding signal in order to receive the HARQ signal for the padding signal from the UE. The padding signal may be referred to as dummy data or a dummy signal because it does not include meaningful information, and may represent a transport block filled entirely with zero padding bits.

The padding signal may be transmitted at a predetermined period in an interval between URLLC data traffics. The period at which the base station transmits the padding signal may be configured based on a preconfigured value. In addition, the transmission period of the padding signal may be adaptively changed based on the channel state. For example, the transmission period of the padding signal may be changed based on a change rate of the channel state or the difference between a current error rate and a target error rate. When the channel state rapidly changes or the difference between the current error rate and the target error rate is larger than a specific threshold, the transmission period of the padding signal may be configured to be shorter. That is, the base station may transmit the padding signal to the UE more frequently.

When time points at which the URLLC data and the padding signal are transmitted overlap each other, the base station may prioritize the transmission of the URLLC data. The base station may receive the HARQ signal for the URLLC data from the UE and correct the OLRC offset. When the base station corrects the OLRC offset and the SINR, based on the HARQ signal for the padding signal or the HARQ signal for the URLLC data, a target block error rate (BLER) value may be configured to be the same.

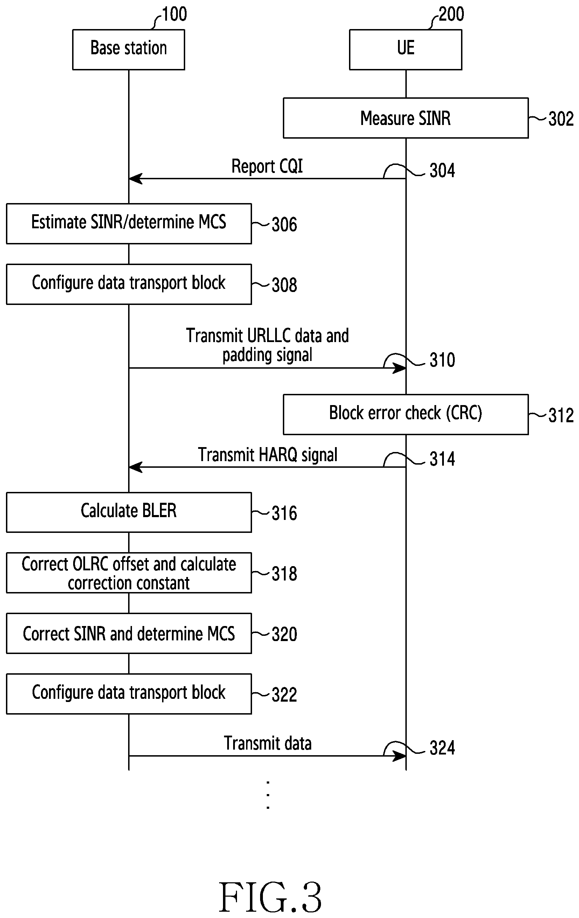

FIG. 3 illustrates a method for link adaptation according to an embodiment of the disclosure.

The UE 200 may measure a signal-to-interference-plus-noise ratio (SINR) in operation 302, and may transmit a channel quality indicator (CQI) including information on the measured SINR to the base station 100 in operation 304.

In operation 306, the base station 100 may estimate the SINR, based on the CQI received from the UE 200, and may determine a modulation and coding scheme (MCS), based on the estimated SINR.

In operation 308 and operation 310, the base station 100 may configure a data transport block, based on the determined MCS, and transmit the URLLC data or the padding signal to the UE 200 through the configured data transport block.

The UE 200 may perform block error check (or cyclic redundancy check (CRC)) on the received data transport block in operation 312, and transmit the HARQ signal (ACK signal or NACK signal) to the base station 100, based on whether an error exists in the received transport block in operation 314.

In operation 316, the base station 100 may generate the BLER, based on the HARQ signal received from the UE 200. In this case, the base station 100 may generate a BLER value in consideration of the last received HARQ signal and the previously received HARQ signal. For example, when the base station 100 receives a plurality of HARQ signals as the data (or signal) transmission is repeated, the base station 100 may generate a BLER value, based on the plurality of HARQ signals.

When the base station 100 generates the BLER value, based on plurality of HARQ signals, the base station 100 may generate the BLER value in consideration of the plurality of HARQ signals that have been generated from an initial transmission time point to an arbitrary transmission time point. The initial transmission time point may indicate a time point at which the base station 100 performs first transmission after receiving a CQI report from the UE 200.

In addition, when the base station 100 generates the BLER value based on the plurality of HARQ signals, the base station 100 may generate the BLER value in consideration of the plurality of HARQ signals in a specific range before the arbitrary transmission time point. In this case, the specific range may be defined based on the number and/or time of initial transmissions for the transport block. In addition, the specific range may be defined as the base station generates and stores an index for the NACK signal, adds 1 to the index value for the NACK signal whenever the HARQ signal for the URLLC data is received, and generates a BLER value when the index value for the NACK signal exceeds a pre-configured parameter value. That is, the specific range may be determined through comparison between the index value for the NACK signal and the preconfigured parameter value.

As an embodiment, when the base station 100 generates a BLER value, based on the number of initial transmissions for the transport block, the base station 100 may generate the BLER value, based on HARQ signals corresponding to the number of initial transmissions for the transport block. The BLER value may be generated by dividing the number of NACK signals for the total number of initial transmissions by the total number of initial transmissions.

As an embodiment, when the base station 100 generates the BLER value, based on time, the base station 100 may generate the BLER value, based on HARQ signals received in a specified time range before an arbitrary transmission time point. The BLER value may be calculated by dividing the number of NACK signals for the initial transmission received in the specific time range by the total number of initial transmissions in the specific time range.

As an embodiment, the base station 100 may generate the BLER value, based on at least one of the HARQ signal corresponding to the URLLC data and the HARQ signal corresponding to the padding signal. For example, the base station 100 may generate the BLER value by considering only the HARQ signal corresponding to the URLLC data. In addition, the base station 100 may generate the BLER value by considering only the HARQ signal corresponding to the padding signal. Furthermore, the base station 100 may generate the BLER value by considering the HARQ signal corresponding to the URLLC data and the HARQ signal corresponding to the padding signal.

In operation 318, the base station 100 may correct the OLRC offset, based on the HARQ signal received from the UE 200, and may generate a correction constant for the SINR, based on the generated BLER value. This will be described below in connection with operation 318.

The base station 100 may correct the OLRC offset ($\Delta_{OLRC}$), based on the HARQ signal received from the UE 200, and correct the SINR estimated based on the CQI or the SINR applied to the previous transmission. The base station 100 may increase ($\Delta_{up}$) or decrease ($\Delta_{down}$) the OLRC offset ($\Delta_{OLRC}$) according to whether the HARQ signal is ACK/NACK. [Equation 1] related thereto is as follows.

[Equation 1]

$$\text{SINR}_{\text{HARQ}} = \text{SINR}_{\text{CQI}} + \Delta_{\text{OLRC}}$$

$$\Delta_{\text{OLRC}} \leftarrow \begin{cases} \Delta_{\text{OLRC}} + \Delta_{\text{up}}, & \text{ACK} \\ \Delta_{\text{OLRC}} - \Delta_{\text{down}}, & \text{NACK} \end{cases}$$

Here, $\text{SINR}_{\text{CQI}}$ may indicate the SINR value estimated from the CQI, and $\text{SINR}_{\text{HARQ}}$ may indicate the SINR value corrected by the HARQ signal. That is, $\text{SINR}_{\text{HARQ}}$ is generated based on $\text{SINR}_{\text{CQI}}$ and the OLRC offset ($\Delta_{\text{OLRC}}$), and the OLRC offset ($\Delta_{\text{OLRC}}$) increases or decreases according to the HARQ signal (ACK/NACK). For example, The base station 100 may increase the existing OLRC offset by $\Delta_{\text{up}}$ when the HARQ signal is ACK, and decrease the existing OLRC offset by $\Delta_{\text{down}}$ when the HARQ signal is NACK.

The ratio of the increase range ($\Delta_{\text{up}}$) and the decrease range ($\Delta_{\text{down}}$) of the OLRC offset according to the HARQ signal may be determined as in [Equation 2] below.

[Equation 2]

$$\frac{\Delta_{up}}{\Delta_{down}} = \frac{BLERt}{1 - BLERt}$$

Here, BLERt may represent a target BLER value.

As an embodiment, the base station 100 may correct the OLRC offset ($\Delta_{\text{OLRC}}$), based on the HARQ signal received in correspondence to the padding signal (or dummy signal, dummy data, etc.), and may correct the estimated SINR, based on the CQI or the SINR applied to the previous transmission. The base station 100 may increase ($\Delta_{\text{up}}$) or decrease ($\Delta_{\text{down}}$) the OLRC offset ($\Delta_{\text{OLRC}}$) according to whether the HARQ signal corresponding to the padding signal is ACK/NACK. [Equation 3] related thereto is as follows.

[Equation 3]

$$\Delta_{\text{OLRC}} \leftarrow \begin{cases} \Delta_{\text{OLRC}} + \Delta_{\text{up}}, & \text{Dummy ACK} \\ \Delta_{\text{OLRC}} - \Delta_{\text{down}}, & \text{Dummy NACK} \end{cases}$$

$$\text{SINR}_{\text{HARQ}} = \text{SINR}_{\text{CQI}} + \Delta_{\text{OLRC}}$$

The base station 100 may increase the existing OLRC offset by $\Delta_{\text{up}}$ when the HARQ signal corresponding to the dummy signal is ACK, and decrease the existing OLRC offset by $\Delta_{\text{down}}$ when the HARQ signal corresponding to the dummy signal is NACK.

As an embodiment, the base station 100 may correct the OLRC offset ($\Delta_{\text{OLRC}}$), based on the HARQ signal received in correspondence to the URLLC data, and correct the SINR estimated based on the CQI or the SINR applied to the previous transmission. The base station 100 may increase ($\Delta_{\text{up}}$) or decrease ($\Delta_{\text{down}}$) the OLRC offset ($\Delta_{\text{OLRC}}$) according to whether the HARQ signal corresponding to the URLLC data (specifically, the transport block including the URLLC data) is ACK/NACK. [Equation 4] related thereto is as follows.

[Equation 4]

$$\Delta_{OLRC} \leftarrow \begin{cases} \Delta_{OLRC} + \Delta_{up}, & \text{URLLC ACK} \\ \Delta_{OLRC} - \Delta_{down}, & \text{URLLC NACK} \end{cases}$$

$$SINR_{HARQ} = SINR_{CQI} + \Delta_{OLRC}$$

The base station 100 may increase the existing OLRC offset by $\Delta_{up}$ when the HARQ signal corresponding to the URLLC data is ACK, and decrease the existing OLRC offset by $\Delta_{down}$ when the HARQ signal corresponding to the URLLC data is NACK.

Since the target BLER is the same in [Equation 3] and [Equation 4], the increase and decrease ranges of the OLRC offset are the same.

In the case of ultra-reliable low latency communication (URLLC) data, the target BLER is very low, and thus the difference between $\Delta\_up$ and $\Delta\_down$ is large. For example, when the target BLER is $10^{-5}$, $\Delta\_up$ may be configured to be $10^{-5}$, and $\Delta\_down$ is a value that is nearly 1 (refer to [Equation 2]). Because the increase range $\Delta\_up$ according to the ACK signal is small and the decrease range $\Delta\_down$ according to the NACK signal is relatively very large, a long time is required for the corrected SINR value to converge to an accurate value. Therefore, in the URLLC environment, performance degradation may occur in terms of throughput and resource efficiency. The following describes the operation of the base station in relation to such performance degradation.

In operation 318, the base station 100 may generate a correction constant for the SINR, based on the generated BLER value. The operation in which the base station 100 generates the correction constant for the SINR, based on the generated BLER value may be based on [Equation 5] and/or [Equation 6].

[Equation 5]

$$SINR_{eff} = SINR_{HARQ} - \alpha$$

$SINR_{HARQ}$ may be corrected based on a correction constant $\alpha$. $SINR_{eff}$ indicates a corrected valid SINR value. The base station 100 may determine an MCS, based on the valid SINR value and transmit data.

Referring to [Equation 5], as $\alpha$ increases, the value of $SINR_{eff}$ decreases, so the base station 100 may conservatively determine the MCS, and the error in the transport block transmitted by the base station 100 may be suppressed. On the other hand, as $\alpha$ decreases, the $SINR_{eff}$ value increases, and thus the base station 100 may aggressively determine the MCS, and the resource efficiency may increase while the probability of the error in the transport block transmitted by the base station 100 may increase.

The correction constant $\alpha$ may be generated based on the difference between the BLER value generated at the transmission time point and the target BLER value. When the BLER value at the transmission time point is larger than the target BLER value, the SINR value estimated by the base station 100 is larger than the actual SINR value, which indicates that the base station 100 applies an aggressive MCS. When the BLER value at the transmission time point is smaller than the target BLER value, the SINR value estimated by the base station 100 is smaller than the actual SINR value, which indicates that the base station 100 applies a conservative MCS.

The correction constant $\alpha$ may be adaptively modified using the difference between the BLER value generated at the transmission time point (however, when an error has not yet occurred, the BLER value may be replaced with a predefined value) and the target BLER value. The correction constant $\alpha$ may be generated based on the BLER value generated by the base station 100 in operation 316.

As an embodiment, the correction constant $\alpha$ may be generated based on [Equation 6] below.

[Equation 6]

$$\alpha \leftarrow \alpha + \eta[log_{10}(BLER) - log_{10}(BLERt)]$$

Here, the BLER is the BLER value at the transmission time point, and BLERt represents the target BLER. $\eta$ is a weight multiplied by the difference between the BLER value and the target BLER value. Specifically, $\eta$ may be a weight multiplied by the difference between a log value of the BLER value and a log value of the target BLER value. The difference between the log value of the BLER value and the log value of the target BLER value may indicate the difference between the BLER value and the target BLER value.

The base station 100 may generate a BLER value in consideration of only the HARQ signal for the URLLC data, or may generate a BLER value in consideration of the HARQ signal for the URLLC data and the padding signal (or padding data, dummy data, etc.) together.

Referring to [Equation 6], the correction constant $\alpha$ may have a value larger or smaller than before, based on the difference between the BLER value and the target BLER value. In addition, the correction constant $\alpha$ may change with a large or small magnitude, based on the difference between the BLER value and the target BLER value.

Referring to [Equation 5], as the correction constant $\alpha$ increases, the $SINR_{eff}$ value decreases and the base station 100 conservatively determines an MCS to transmit, so the error rate may decrease and the BLER value may converge close to the target BLER. On the other hand, as the correction constant $\alpha$ decreases, the value of $SINR_{eff}$ value increases and the base station 100 aggressively determines an MCS to transmit, so the error rate may increase, and the BLER value may converge close to the target BLER.

In operation 320, the base station 100 may correct the SINR, based on the corrected OLRC offset and the correction constant $\alpha$ and determine an MCS, based on the corrected SINR. The corrected SINR may indicate the $SINR_{eff}$ of [Equation 5].

In operations 322 and 324, the base station 100 may configure a data transport block, based on the determined MCS, and transmit the URLLC data or the padding signal to the UE 200 through the configured data transport block.

In addition, a series of processes according to operations 312 to 314 may be repeatedly performed by the base station 100 or the UE 200.

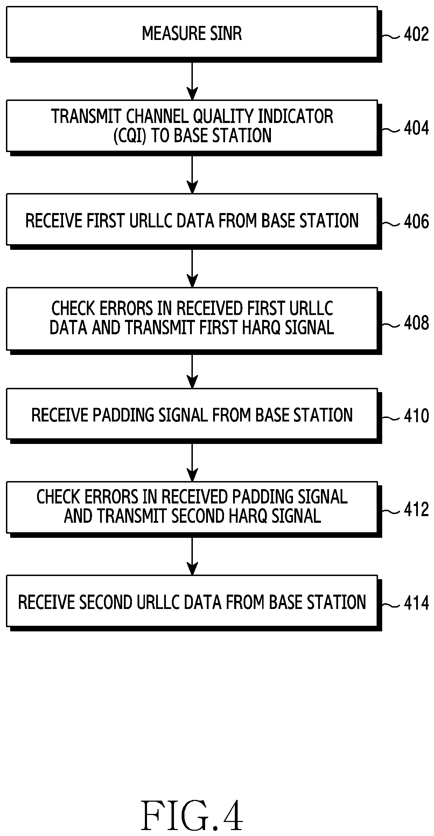

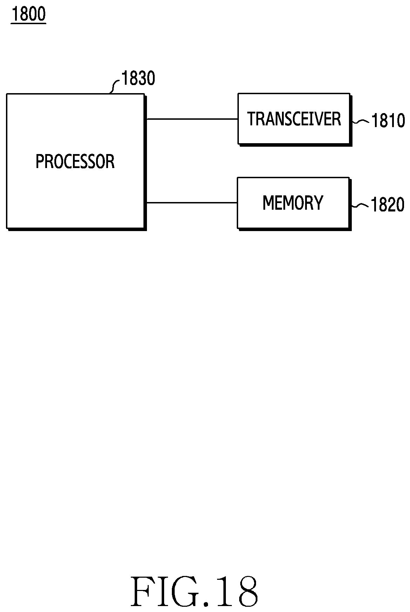

FIG. 4 illustrates a method performed by the user equipment (UE) according to an embodiment of the disclosure. The operation of the UE illustrated in FIG. 4 may correspond to the operation performed by the UE 200 in FIG. 3. Operations of FIG. 4 may be performed by a UE 1800 of FIG. 18.

Referring to FIG. 4, the UE may measure an SINR in operation 402 (operation 302 of FIG. 3), and transmit a CQI to the base station in operation 404 (operation 304 of FIG. 3). The channel quality indicator (CQI) may include information regarding the measured SINR.

The UE may receive first URLLC data from the base station in operation 406 (operation 310 in FIG. 3) and check an error (or perform cyclic redundancy check) in the first URLLC data in operation 408 (operation 312 in FIG. 3), and transmit a first HARQ signal to the base station (operation 314 in FIG. 3). The first HARQ signal may include an ACK signal or a NACK signal based on the error check result for the first URLLC data.

In operation 410, the UE may receive a padding signal (or padding data, dummy data, dummy signal, etc.) from the base station (operation 310 of FIG. 3).

In operation 412, the UE may check an error (or perform cyclic redundancy check) in the received padding signal, and transmit a second HARQ signal to the base station, based on the error check result (operations 312 and 314 of FIG. 3).

In operation 414, the UE may receive second URLLC data from the base station (operation 324 of FIG. 3).

The UE may transmit the HARQ signal to the base station for the URLLC data or the padding signal received from the base station. The base station may generate a BLER value in consideration of the HARQ signal received from the UE, correct the SINR, and transmit the URLLC data or the padding signal to the UE, based on the MCS determined by the corrected SINR.

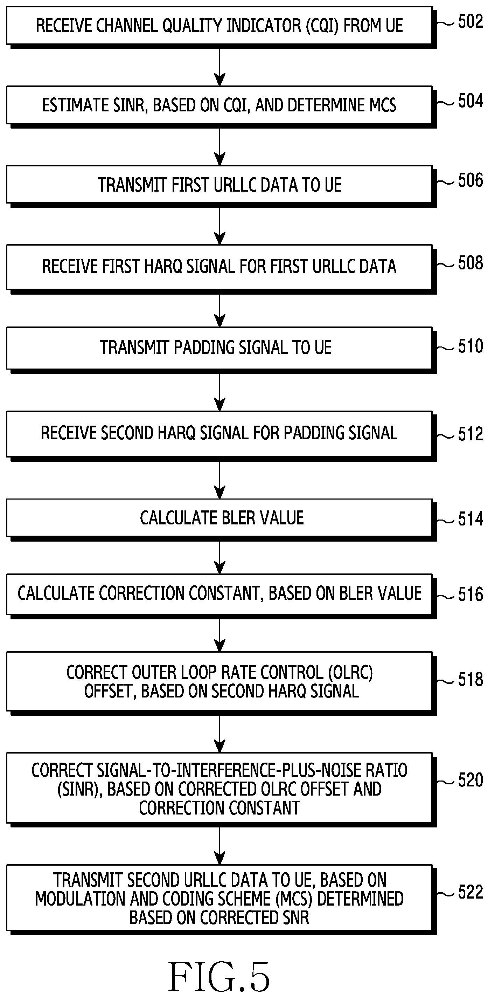

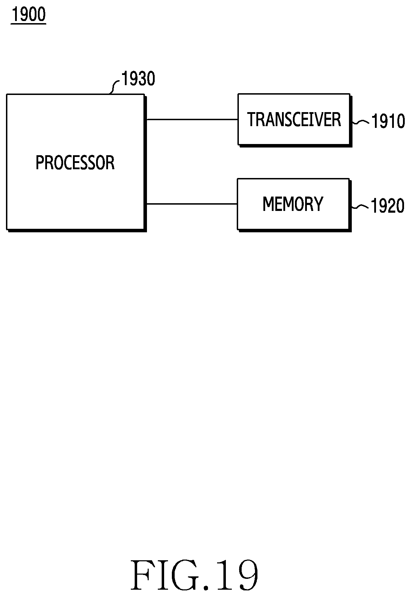

FIG. 5 illustrates a method performed by the base station according to an embodiment of the disclosure. The operation of the base station illustrated in FIG. 5 may correspond to the operation performed by the base station 100 in FIG. 3. Operations of FIG. 5 may be operations performed by a base station 1900 of FIG. 19.

In operation 502, the base station may receive a CQI from the UE. The CQI may include an SINR value measured by the UE.

In operation 504, the base station may estimate an SINR value, based on the CQI received from the UE, and determine an MCS, based on the estimated SINR value (operation 306 of FIG. 3).

In operation 506, the base station may transmit the first URLLC data to the UE, based on the determined MCS (operations 308 and 310 of FIG. 3).

In operation 508, the base station may receive a first HARQ signal corresponding to the first URLLC data from the UE (operation 314 of FIG. 3).

In operation 510, the base station may transmit a padding signal to the UE (operation 310 of FIG. 3). The padding signal may be transmitted at a constant period in an interval of URLLC data traffics. The period at which the base station transmits the padding signal may be configured based on a preconfigured value. The transmission period of the padding signal may be adaptively changed, based on a channel state.

For example, the transmission period of the padding signal may be changed based on a change rate of the channel state or the difference between a current error rate and a target error rate. When the channel state rapidly changes or the difference between the current error rate and the target error rate is larger than a specific threshold, the transmission period of the padding signal may be configured to be shorter. That is, the base station may transmit the padding signal to the UE more frequently.

In operation 512, the base station may receive a second HARQ signal for the padding signal (operation 314 of FIG. 3).

In operation 514, the base station may generate a BLER value (operation 316 of FIG. 3). The base station may generate the BLER value, based on a HARQ signal, from a first transmission time point (the first transmission time point after the CQI is received from the UE) to an arbitrary transmission time point. In addition, the base station may generate the BLER value in consideration of a plurality of HARQ signals in a specific range before the arbitrary transmission time point. In this case, the specific range may be defined based on the number and/or time of initial transmissions for the transport block. In addition, the specific range may be defined as the base station generates and stores an index for the NACK signal, adds 1 to the index value for the NACK signal whenever the HARQ signal for the URLLC data is received, and generates a BLER value when the index value for the NACK signal exceeds a pre-configured parameter value. That is, the specific range may be determined through comparison between the index value for the NACK signal and the preconfigured parameter value.

In operation 516, the base station may generate a correction constant, based on the generated BLER value (operation 318 of FIG. 3).

In operation 518, the base station may correct the OLRC offset, based on the second HARQ signal (operation 318 of FIG. 3).

In operation 520, the base station may correct the SINR, based on the corrected ORC offset and the correction constant (operation 320 of FIG. 3).

In operation 522, the base station may transmit second URLLC data to the UE, based on the MCS determined according to the corrected SINR (operations 322 and 324 of FIG. 3).

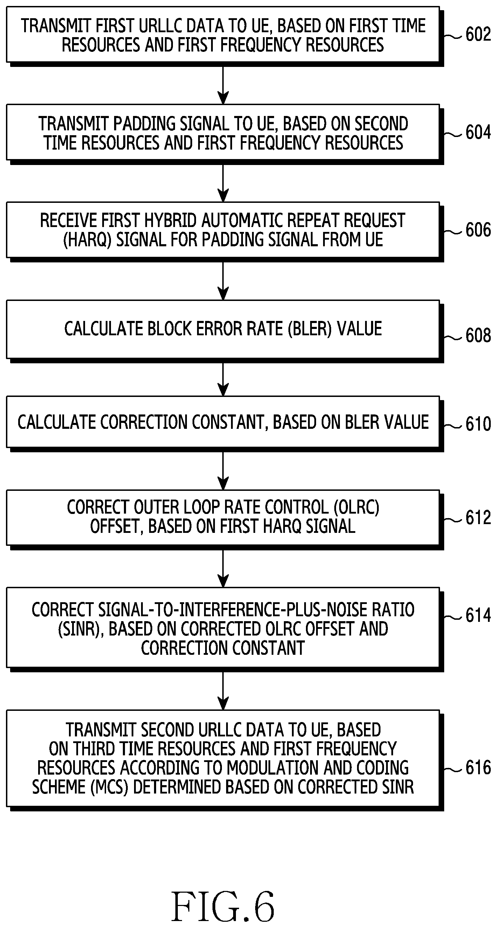

FIG. 6 illustrates a method performed by the base station according to an embodiment of the disclosure. Specifically, FIG. 6 illustrates operations of the base station between a first URLLC data transmission operation and a second URLLC data transmission operation. The operations of FIG. 6 may be operations performed by a base station 1900 of FIG. 19.

In operation 602, the base station transmits first URLLC data to the UE, based on first time resources and first frequency resources. The base station may determine an MCS, based on the estimated SINR value, and may transmit the first URLLC data, based on the determined MCS. In this case, the base station may receive a CQI from the UE, and estimate an SINR value, based on the received CQI.

In operation 604, the base station transmits a padding signal, based on second time resources and the first frequency resources. The first time resources and the second time resources are different time resources. The second time resources may be time resources after the first time resources, and may include a plurality of periodically configured time resources. That is, the base station may periodically transmit the padding signal to the UE by using the second time resources. In this case, the period of transmitting the padding signal may be based on a preconfigured value. In addition, the period of transmitting the padding signal may be adaptively changed based on a channel state.

In operation 606, the base station receives a first HARQ signal for the padding signal from the UE. The first HARQ signal may include an ACK signal or a NACK signal. When the second time resources include a plurality of periodic time resources, the first HARQ signal may indicate a HARQ signal based on a padding signal for the last time resources among the time resources included in the second time resources.

In operation 608, the base station may generate a BLER value (operation 316 of FIG. 3). The base station may generate the BLER value, based on a HARQ signal, from a first transmission time point (the first transmission time point after the CQI is received from the UE) to an arbitrary transmission time point (for example, another transmission time point after the first transmission time point). For example, the base station may generate the BLER value, based on all NACK signals generated between the time point at which the CQI is received from the UE and the arbitrary transmission time point. In this case, the NACK signal may be based on at least one of a NACK signal for the first URLLC data and a NACK signal for the padding signal. That is, the base station may generate the BLER value, based on a HARQ signal for the URLLC data and/or a HARQ signal for the padding signal.

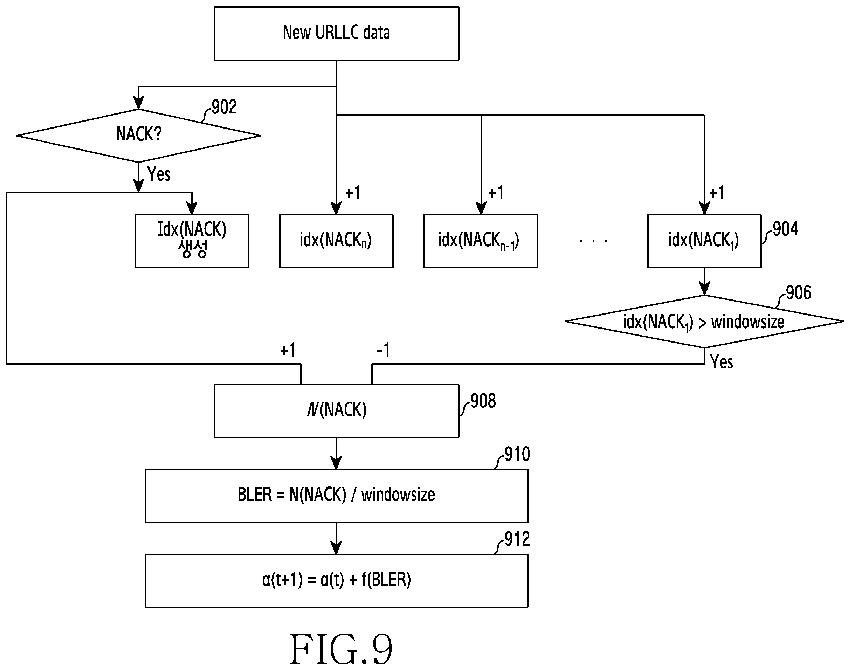

In addition, the base station may generate the BLER value in consideration of a plurality of HARQ signals in a specific range before the arbitrary transmission occasion. For example, the base station may generate the BLER value, based on a NACK signal for transport blocks belonging to a specific range among the transport blocks transmitted between the time point at which the CQI is received from the UE and the arbitrary transmission time point (for example, another transmission time point after the first transmission time point). The NACK signal may be based on at least one of a NACK signal for the first URLLC data and a NACK signal for the padding signal. That is, the base station may generate the BLER value, based on a HARQ signal for the URLLC data and/or a HARQ signal for the padding signal. In addition, the specific range may be defined based on the number and/or time of initial transmissions for the transport block. Furthermore, the specific range may be defined, based on comparison between an index value for a NACK signal and a preconfigured parameter value (see FIG. 9).

In operation 610, the base station may generate a correction constant for the SINR, based on the generated BLER value (operation 318 of FIG. 3). In this case, the base station may generate the correction constant for the SINR, based on the difference between the generated BLER value and the target BLER value. In addition, the base station may generate the correction constant by applying a weight to the difference between the generated BLER value and the target BLER value. The value of the correction constant increases as the BLER value is larger than the target BLER value, and the corrected SINR (or valid SINR) becomes smaller as the correction constant increases (see [Equation 5] and [Equation 6]).

In operation 612, the base station may correct the OLRC offset, based on the first HARQ signal (see [Equation 1], [Equation 3], and [Equation 4]).

In operation 614, the base station may correct the SINR, based on the corrected OLRC offset and the correction constant see [Equation 5] and [Equation 6]).

In operation 616, the base station may transmit second URLLC data to the UE, based on third time resources and the first frequency resources, based on the MCS determined based on the corrected SINR. The third time resources may indicate time resources after the second time resources in operation 604.

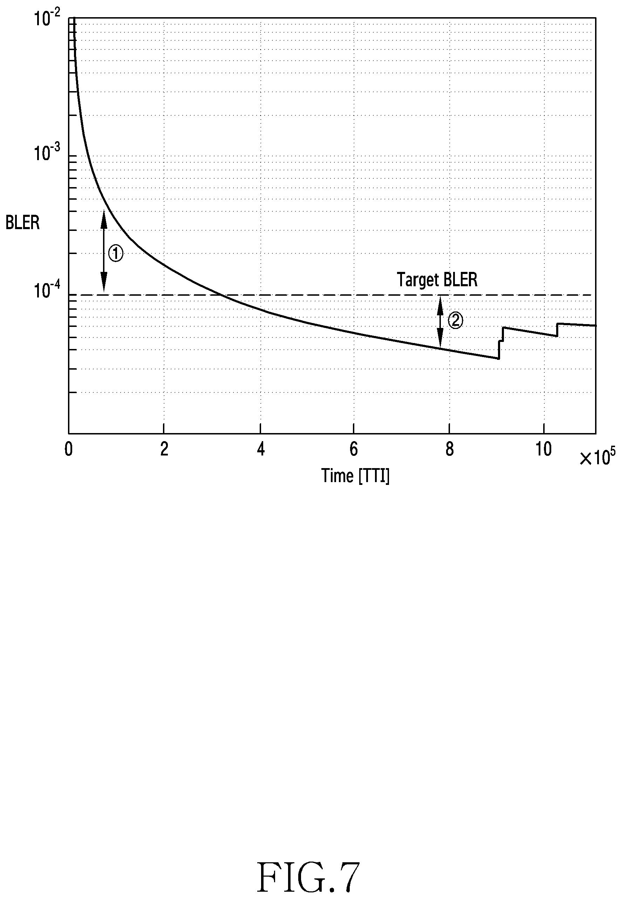

FIG. 7 is a graph illustrating the difference between a generated BLER and a target BLER according to an embodiment of the disclosure.

Referring to FIG. 7, a graph indicating the BLER of URLLC data over time is illustrated. A BLER value at point 1 on the graph is greater than a target BLER value Therefore, a SINR correction constant $\alpha$ at point 1 increases according to [Equation 6]. Accordingly, based on [Equation 5], since a valid SINR value generated in comparison with SINR_HARQ generated based on a HARQ signal significantly becomes smaller and the valid SINR value becomes small, the base station determines the MCS conservatively. As a result, a block error rate of transport blocks transmitted from the base station may decrease, and the BLER value may become close to the target BLER value.

On the other hand, at point 2 on the graph, the BLER value is smaller than the target BLER value. Therefore, a SINR correction constant $\alpha$ at point 2 is reduced by [Equation 6]. Accordingly, the valid SINR value generated by [Equation 5] is only slightly smaller than the SINR_HARQ generated based on the HARQ signal. Therefore, the base station aggressively determines the MCS in comparison with point 1 As a result, a block error rate of transport blocks transmitted from the base station may increase, and the BLER value may become close to the target BLER value. That is, at point 2, the base station may aggressively select the MCS to increase throughput.

A method according to an embodiment may rapidly change the SINR by adjusting a change in the correction constant $\alpha$, based on the difference between the BLER value and the target BLER value. Therefore, the BLER value may converge to the target BLER value rapidly. In addition, the smaller the difference between the BLER value and the target BLER value, the smaller the change in the correction constant, and the BLER value may be stably converged to the target BLER value.

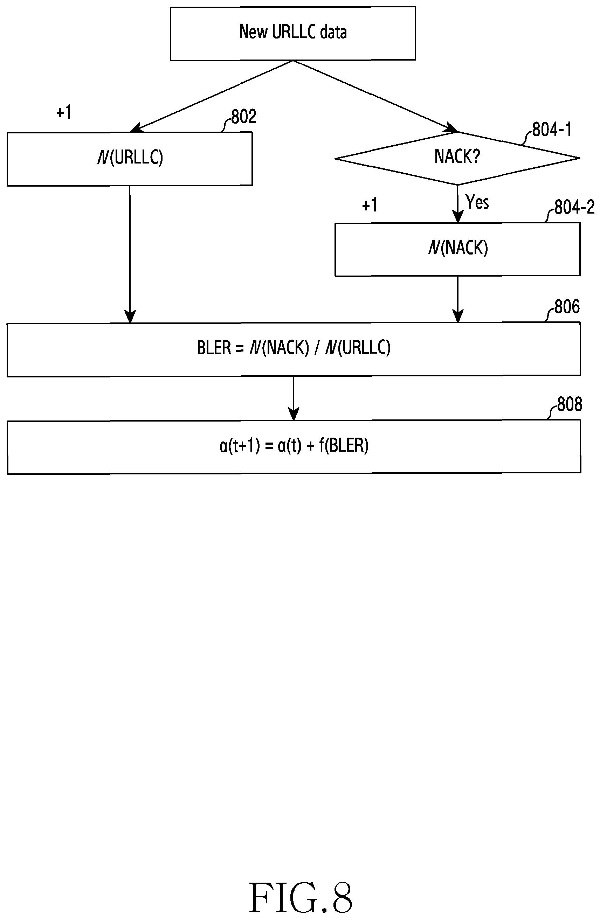

FIG. 8 illustrates a method of generating (or calculating) a correction constant according to an embodiment of the disclosure.

FIG. 8 illustrates a method by which the base station generates a BLER value by reflecting all errors accumulated from an initial transmission time point (e.g., the initial transmission time point after the base station has received a CQI from the UE) to an arbitrary transmission time point t, and generates the correction constant for SINR. The base station may update the SINR correction constant $\alpha$ over time while allocating less data capacity, based on an infinite impulse response (IIR) method.

Referring to FIG. 8, in operation 802, when receiving a HARQ signal for new URLLC data, the base station increases a value indicating the number of URLLC data by +1. In operation 804, the base station may determine whether the HARQ signal for the new URLLC data is an NACK signal in operation 804-1 and, when the signal is the NACK signal, increase a value indicating the number of NACKs by +1 in operation 804-2. In operation 806, the base station may generate a BLER value by dividing the value indicating the number of NACKs by the value indicating the number of URLLC data.

By operation 802 and operation 804, the base station may know the number of all URLLC data and the number of NACK signals transmitted until the arbitrary transmission time point t. That is, the number of all accumulated NACK signals may be reflected in generating a BLER value. In operation 808, the base station may generate a new correction constant $\alpha$ (t+1), based on the generated BLER value and the previous correction constant $\alpha$(t). f(BLER) may indicate [log10(BLER) - log10(BLERt)] as shown in [Equation 6].

As an embodiment, operations 802 to 808 may be performed for URLLC data and/or a padding signal (or dummy signal, dummy data, etc.). For example, the base station may generate a BLER value, based on the URLLC data and a NACK signal for the URLLC data. In addition, the base station may generate a BLER value, based on the URLLC data and the padding signal, the NACK signal for the URLLC data, and the NACK signal for the dummy signal. Furthermore, the base station may generate a BLER value, based on the dummy signal and the NACK signal for the dummy signal.

FIG. 9 illustrates a method of generating (or calculating) a correction constant according to an embodiment of the disclosure.

FIG. 9 illustrates a method by which the base station generates a BLER value by reflecting an error in a specific range before an arbitrary transmission time point, and generates a correction constant for SINR.

As an embodiment, when receiving a NACK signal for URLLC data, the base station may generate an index for the corresponding NACK signal. For example, when receiving a first NACK signal, the base station may generate an index for the first NACK signal as a value of 1. In addition, the base station may add 1 to the value of the index for the first NACK signal generated whenever the HARQ signal for the next URLLC data is received in operation 904. The base station may compare the value of the index for the first NACK signal with a pre-configured parameter (windowSize in FIG. 9) value in operation 906. When the value of the index for the first NACK signal is greater than the configured parameter value, the base station may generate the number of NACK signals generated until then in operation 908, and may generate a BLER value, based on the generated number of NACK signals and the configured parameter value (windowSize in FIG. 9) in operation 910. In addition, the base station may update the correction constant for the SINR, based on the generated BLER value in operation 912. Such an operation may be performed by consuming a small amount of memory due to the characteristics of the URLLC data having the small number of NACK signals. In other words, when the base station reflects the error in the specific range before the arbitrary transmission occasion, the specific range may be configured based on comparison between the index value of the NACK signal and the preconfigured parameter value.

In FIG. 9, idx(NACKn) indicates an index of NACKn. When the HARQ signal for new URLLC data is the NACK signal, the base station may store the index of NACK. In addition, the base station may perform an update by adding 1 to the stored index value of NACK whenever receiving the HARQ signal for the URLLC data. When the HARQ signal for the URLLC data is the NACK signal, the base station may increase the number of existing NACKs to update the same. When the index value of NACK having the largest value exceeds the configured parameter (window size), the number of NACK signals may be reduced to update the number of NACK signals. The index of the corresponding NACK may be removed. The base station may generate a BLER value by dividing the generated number of NACKs by the configured parameter (window size) In addition, the base station may update the SINR correction constant $\alpha(t)$, based on the generated BLER value. The memory required for such an operation is the maximum number of NACKs, the BLER value, and the correction constant for SINR. That is, due to the characteristics of URLLC data, the number of NACKs may be small, and thus a large amount of memory is not consumed.

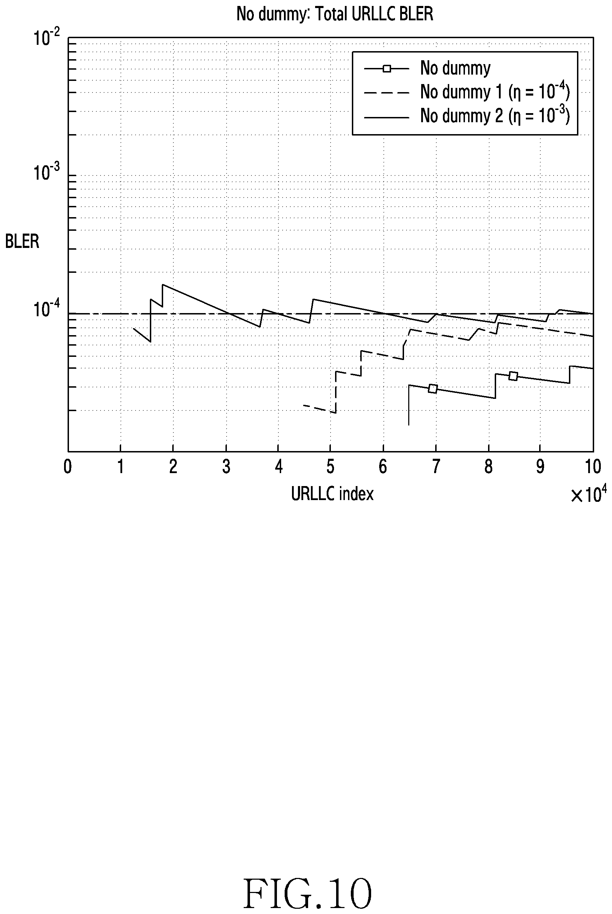

Hereinafter, FIGS. 10 to 17 illustrate examples and effects according to the above-described embodiments.

In FIGS. 10 to 17, the horizontal axis of the graph represents a URLLC index, and the vertical axis represents a BLER value. The URLLC index value may be understood to increase over time. Therefore, the graph may be understood as representing a BLER value according to the passage of time.

As an index for evaluating the performance of embodiments of the disclosure, a BLER value and a physical resource block (PRB) are used. The PRB indicates the amount of resources used to configure the configured transport block, and a smaller value indicates that a smaller amount of resources is used.

Configuration information for an experiment is as follows. The number of antennas of the base station and the UE are 8 and 2, respectively, and the subcarrier spacing and carrier frequency for data transmission are 30 kHz and 4 GHz, respectively. For URLLC data and a padding signal, a transport block is configured by allocating resource blocks (RBs) allocated to approximately 100 bytes for each MCS.

The target BLER value for the URLLC data and the padding signal is $10^{-4}$ (0.01%), and when the base station corrects an ORLC offset, the increase range and the decrease range of the ORLC offset are configured to be 0.0001 dB and 0.9999 dB, respectively. It is assumed that the UE is moving at 30 km/h. As a channel model between the base station and the UE, a CDL-B model in an NR system is used. In the simulation, it is assumed that an actual SINR is 10 dB and an SINR estimated by the base station is 0 dB, and thus the difference between the actual SINR and the initial estimated SINR is configured. The URLLC data traffic is generated such that a total of 105 data follow an average transmission period of 1000 TTI, based on the FTP model 3 (Poisson arrival process) The transmission period of the padding signal is 100 TTI. The weight $\eta$ of the SINR correction constant is applied with $10^{-4}$ and $10^{-3}$.

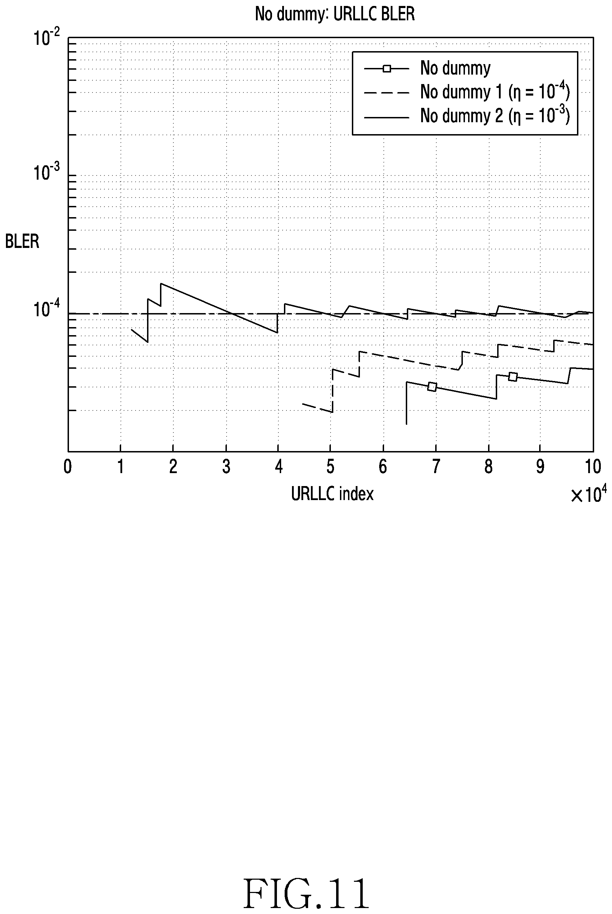

FIGS. 10 and 11 are graphs illustrating a BLER value according to an embodiment of the disclosure.

FIGS. 10 and 11 are results of using a link adaptation method by using a padding signal (or dummy signal, dummy data, etc.) and a BLER value generated at a transmission time point. The graph illustrated in FIG. 10 indicates a result using a BLER value that reflects all errors generated from an initial transmission time point to an arbitrary transmission time point, and the graph illustrated in FIG. 11 indicates a result using a BLER value that reflects only errors generated in a specific range.

A No dummy graph indicates a case in which a BLER value at a transmission time point is not used. A No dummy 1 graph is a graph that shows a result when a BLER value at a transmission time point is used and a weight ($\eta$) $10^{-4}$ is applied to update a correction constant for SINR. A No dummy 2 graph is a graph that shows a result when a BLER value at a transmission time point is used and a weight ($\eta$) $10^{-3}$ is applied to update a correction constant for SINR.

Referring to FIGS. 10 and 11, in the no dummy graph, it is identified that the base station continuously conservatively transmits data, and the channel convergence rate is slow and the BLER value continues to be lower than the target BLER value.

In contrast, in the No dummy 1 and No dummy 2 graphs, it is identified that the convergence rate has been improved to the target BLER value of $10^{-4}$. In addition, it is identified that the weight ($\eta$) is related to the convergence performance through the No dummy 1 and No dummy 2 graphs. The performance of convergence to the target BLER value may be improved by updating the SINR correction constant, based on the BLER value at the transmission time point.

[Table 1] shows a PRB value related to FIG. 10 and FIG. 11. Option 1 indicates a case in which the BLER value that reflects errors generated from the initial transmission occasion to the arbitrary transmission occasion is used. Option 2 indicates a case in which the BLER value that reflects errors generated in the specific range is used. Referring to [Table 1], a lower PRB value is shown in the case of No dummy 1 and No dummy 2 than in the case of No dummy, and thus it may be known that resource efficiency is improved.

[Table 1]

| PRB [$\times 10^5$] | Option 1 | Option 2 |
|---|---|---|
| No dummy | 9.0 | 9.0 |
| No dummy 1($\eta = 10^{-4}$) | 7.9 | 7.9 |
| No dummy 2($\eta = 10^{-3}$) | 6.3 | 6.4 |

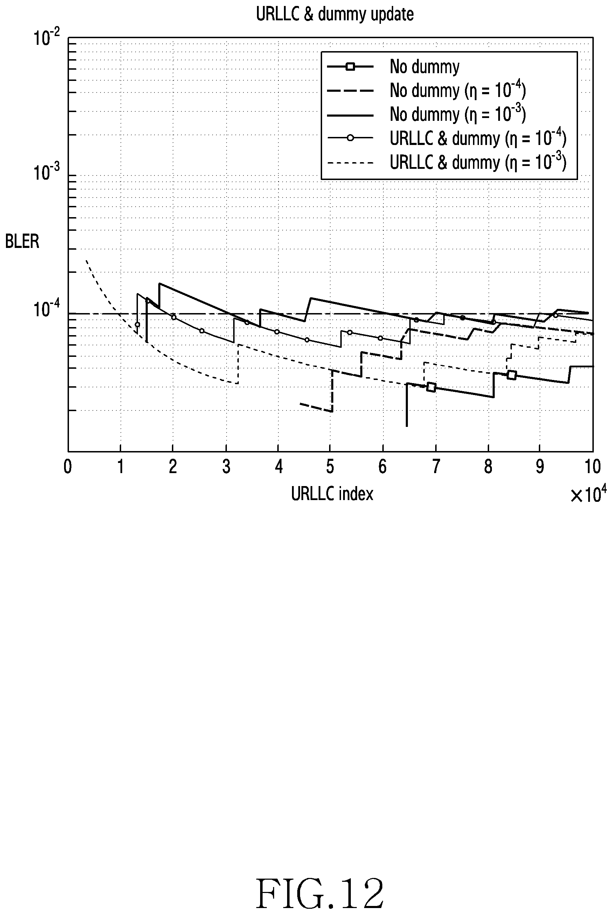

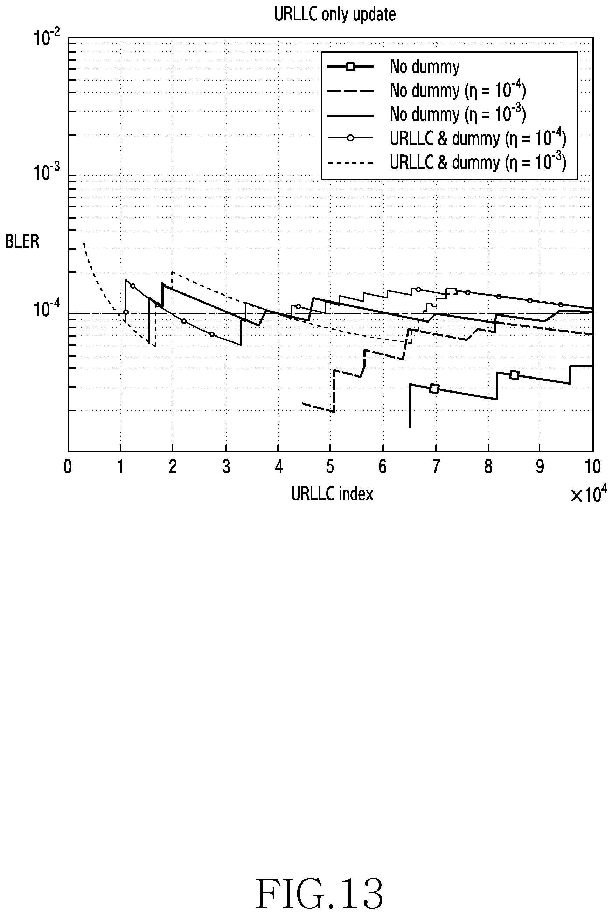

FIG. 12 and FIG. 13 are graphs illustrating a BLER value according to an embodiment of the disclosure. In FIG. 12 and FIG. 13, the graphs of No dummy, No dummy 1, and No dummy 2 are the same as in FIG. 10. In FIG. 12 and FIG. 13, the URLLC & dummy graph indicates a result in a case where the base station periodically transmits a padding signal (or dummy signal, dummy data, etc.), and updates a correction constant $\alpha$ for the SINR by using a BLER value of a transmission time point.

In addition, FIG. 12 is a graph in a case in which, when the base station generates a BLER value, all errors in the URLLC data and the padding signal are reflected. FIG. 13 is a graph in a case that, when the base station generates a BLER value, only errors in the URLLC data are reflected.

Referring to FIG. 12 and FIG. 13, the URLLC & dummy graph indicates high convergence performance, and all of the cases where different values are applied to the weight ($\eta$) effectively converge to the target BLER value. That is, it exhibits the performance more robust to the weight.

[Table 2] shows a PRB value for URLLC data with respect to No dummy 1 and No dummy 2 in FIG. 10, and URLLC & dummy in FIG. 12 and FIG. 13. Here, Option 3 is a case in which all errors in the URLLC data and the padding signal are considered (the case of FIG. 12), and Option 4 is a case in which only errors in the URLLC data are considered (the case of FIG. 13).

[Table 2]

| PRB [$\times 10^5$] | No dummy | Option 3 (URLLC & dummy) | Option 4 (URLLC & dummy) |
|---|---|---|---|
| $\eta = 10^{-4}$ | 7.9 | 6.1 | 6.2 |
| $\eta = 10^{-3}$ | 6.3 | 5.9 | 7.0 |

Referring to [Table 2], in comparison to the case of No dummy, the PRB value is smaller in options 3 and 4, and the difference in the PRB value when the weight value is changed is also smaller. Therefore, the efficiency of resource usage and robustness to the weight value are verified.

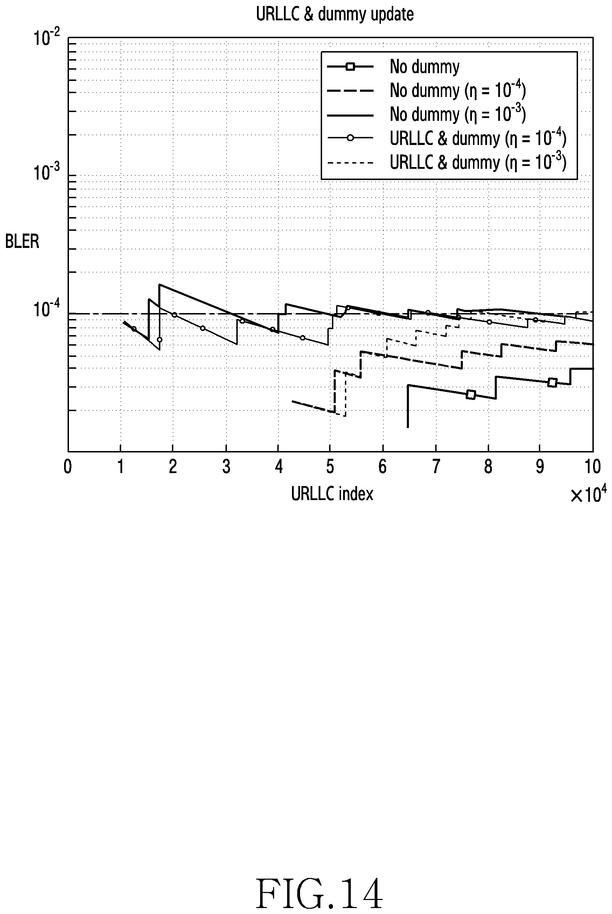

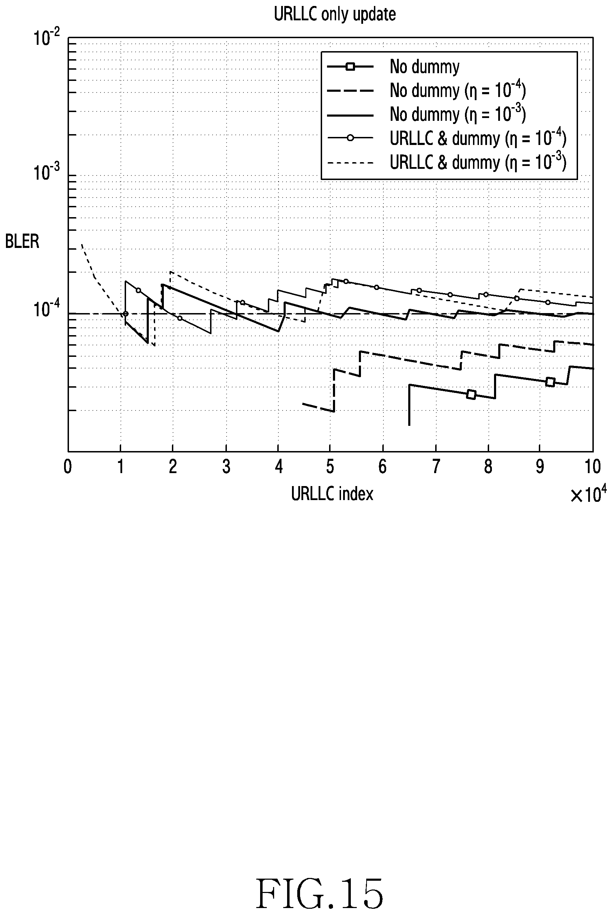

FIG. 14 and FIG. 15 are graphs indicating a BLER value according to an embodiment of the disclosure. FIG. 14 and FIG. 15 illustrate a case in which the base station updates the SINR correction constant $\alpha$ by using a BLER value reflecting only errors in a specific range before a transmission time point. Other configurations are the same as FIG. 12.

FIG. 14 illustrates a result in which errors in URLLC data and a padding signal are reflected in a specific range when the base station generates a BLER value, and FIG. 15 illustrates a result in which only errors in URLLC data are reflected in a specific range when the base station generates a BLER value.

The graphs of No dummy, No dummy 1, and No dummy 2 in FIG. 14 and FIG. 15 are expressed in the same manner as the graph of FIG. 11 for comparison.

Referring to FIG. 14 and FIG. 15, even when the base station generates a BLER value by reflecting errors that belong to a specific range before a transmission time point, the performance of the BLER value converging to the target BLER value is improved. In addition, the performance robust to the weight ($\eta$) is identified.

[Table 3] shows a PRB value for URLLC data with respect to No dummy 1 and No dummy 2 in FIG. 10, and URLLC & dummy in FIG. 14 and FIG. 15. Here, Option 5 is a case in which all errors in the URLLC data and the padding signal are considered (the case of FIG. 14), and Option 6 is a case in which only errors in the URLLC data are considered (the case of FIG. 15).

[Table 3]

| PRB [$\times 10^5$] | No dummy | Option 5 | Option 6 |
|---|---|---|---|
| $\eta = 10^{-4}$ | 7.9 | 6.1 | 6.2 |
| $\eta = 10^{-3}$ | 6.3 | 6.3 | 8.6 |

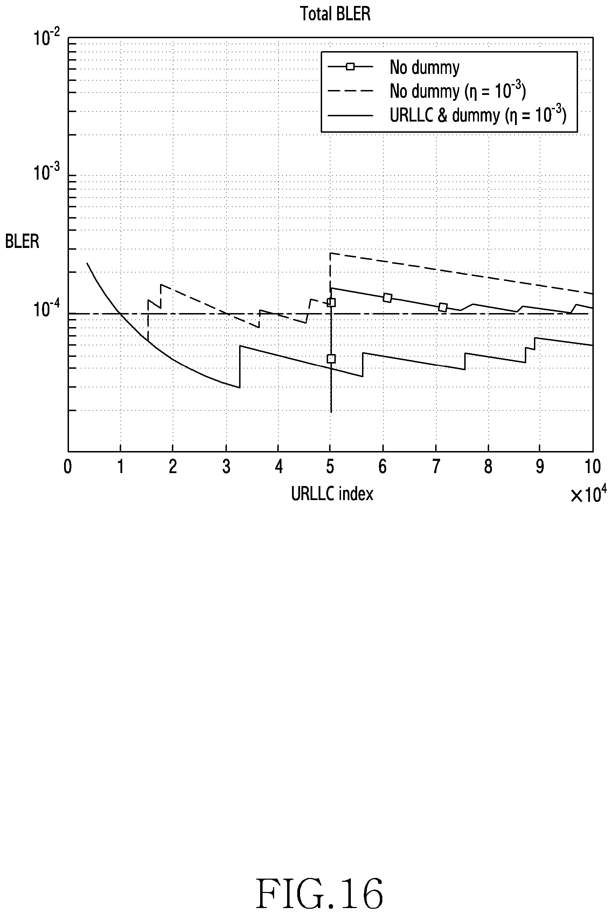

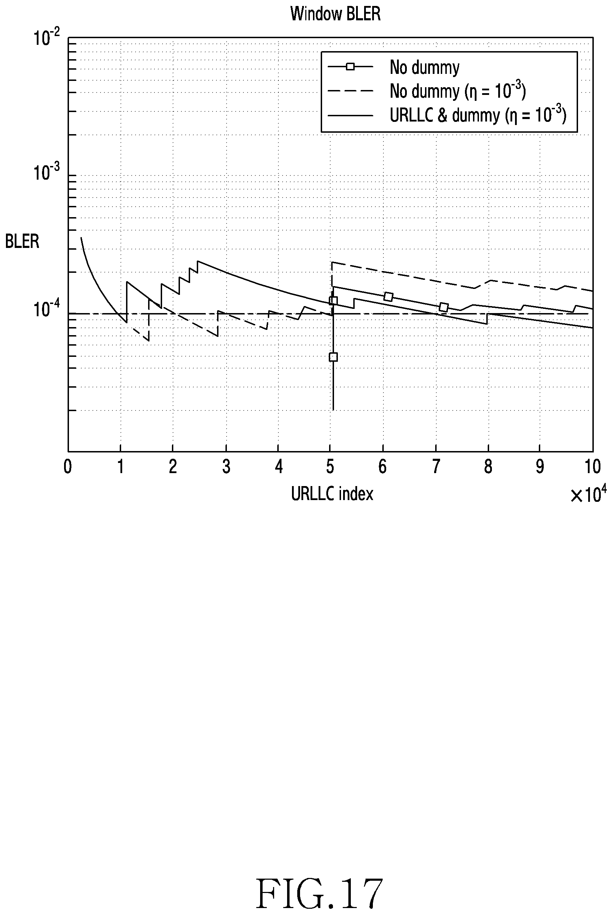

FIGS. 16 and 17 are graphs illustrating a BLER value according to an embodiment of the disclosure.

FIG. 16 and FIG. 17 illustrate a change in the BLER when the SINR of a channel rapidly changes in the case where the base station transmits a padding signal. In FIG. 16 and FIG. 17, the SINR value rapidly decreases from 10 dB to -5 dB in the middle part of URLLC indexes. That is, a situation in which a channel state rapidly deteriorates is assumed.

FIG. 16 illustrates a case in which the base station generates a BLER by reflecting errors in URLLC data and a padding signal (or dummy signal/dummy data) generated from an initial transmission time point (a time point at which a CQI is first transmitted after the CQI is received from the UE) to an arbitrary transmission time point, and updates a correction constant for an SINR.

FIG. 17 illustrates a case in which the base station generates (or calculates) a BLER value by reflecting errors generated in a specific range (windowSize 10000) before a transmission time point, and updates a correction constant for a SINR.

In FIG. 16 and FIG. 17, the No dummy graph is a graph in a case where the base station does not transmit the padding signal (or dummy signal, dummy data, etc.), and the No dummy ($\eta = 10^{-3}$) graph is a graph in a case where the base station does not transmit the padding signal but generates the BLER value at the transmission time point to update the SINR correction constant. The URLLC & dummy graph is a graph illustrating a case in which the base station transmits the padding signal, generates the BLER value at the transmission time point, and updates the SINR correction constant.

Referring to FIG. 16 and FIG. 17, in the case of the No dummy graph, when a channel state rapidly deteriorates, the SINR estimated as a relatively good channel state cannot be rapidly changed to a SINR in a bad state, and thus the errors rapidly increase. As a result, the BLER value becomes higher than the target BLER value. On the other hand, in the case of the URLLC & dummy graph, even if the channel state is rapidly deteriorated, an appropriate SINR value is estimated based on the HARQ signal for the padding signal, and thus the BLER value does not rapidly increase and converges to the target BLER value.

[Table 4] indicates a PRB value for URLLC data with regard to No dummy ($10^{-3}$) and URLLC & dummy ($10^{-3}$) in FIG. 16 and FIG. 17. Option 7 is a case in which a BLER value is generated by reflecting all errors up to a transmission time point (the case of FIG. 16), and Option 8 is a case in which a BLER value is generated by reflecting only errors in a specific range before a transmission time point (the case of FIG. 17).

[Table 4]

| PRB [$\times 10^5$] | Option 7 | Option 8 |
|---|---|---|
| No dummy ($\eta = 10^{-3}$) | 24.7 | 21.8 |
| URLLC & dummy ($\eta = 10^{-3}$) | 17.4 | 19.4 |

Referring to [Table 4], in Option 7 and Option 8, it is identified that URLLC & dummy has a smaller PRB value than No dummy. That is, it is identified that the resource efficiency is high when the base station transmits a padding signal, generates a BLER value, and updates a SINR correction constant, based on the generated BLER value.

FIG. 18 illustrates components of a UE 1800 according to an embodiment of the disclosure.

Referring to FIG. 18, the user equipment (UE) 1800 according to an embodiment includes a transceiver 1810, a processor 1830 connected to the transceiver 1810, and a memory 1820 connected to the processor 1830. The UE 1800 of FIG. 18 may perform the operations described in FIG. 3 and FIG. 4.

The UE 1800 may include a larger or smaller number of components than the aforementioned components. In addition, the transceiver 1810, the processor 1830, and the memory 1820 may be implemented as a single chip.

The transceiver 1810 generally refers to a receiver and a transmitter, and may communicate with a base station. Information that is transmitted and received may include control information and data. For example, information on a channel quality indicator (CQI) or a measured SINR may be transmitted from the UE to the base station 1900 through the transceiver 1810, and URLLC data or a padding signal according to an embodiment of the disclosure may be received by the user through the transceiver 1810. The transceiver 1810 may include an RF transmitter for up-converting and amplifying a frequency of a transmission signal, and an RF receiver for low-noise amplifying and down-converting a frequency of a reception signal. However, this is only an example of the transceiver 1810, and components of the transceiver 1810 are not limited to the RF transmitter and the RF receiver. The transceiver 1810 may receive signals through a radio channel and output the same to the processor 1830, and may transmit signals output from the processor 1830 through the radio channel.

The memory 1820 may store programs and data necessary for the operation of the device. In addition, the memory 1820 may store control information or data included in signals acquired from the device. The memory 1820 may be a storage medium, such as a read-only memory (ROM), a random-access memory (RAM), a hard disk, a CD-ROM, or a DVD, or a combination of storage media.

The processor 1830 may control a series of processes so that the device operates as described above. For example, the transceiver 1810 may receive a data signal including a message transmitted from the user, and the processor 1830 may identify a result of the reception of the transmitted data signal.

FIG. 19 illustrates components of the base station 1900 according to an embodiment of the disclosure.

Referring to FIG. 19, the base station 1900 may include a transceiver 1910, a processor 1930 connected to the transceiver 1910, and a memory 1920 connected to the processor 1930. The base station 1900 of FIG. 19 may perform the operations described in FIGS. 3 to 6.

The base station 1900 may include more or fewer components than the above-described components. In addition, the transceiver 1910, the processor 1930, and the memory 1920 may be implemented as a single chip.

The transceiver 1910 generally refers to a receiver and a transmitter, and may transmit and receive signals to and from the UE 1800 of the user. Information that is transmitted and received may include control information and data. For example, information on the CQI generated by the user and the measured SINR may be received by the base station 1900 through the transceiver 1910, and the URLLC data or the padding signal (or dummy signal or dummy data) may be transmitted to the user through the transceiver 1910. The transceiver 1910 may include an RF transmitter for up-converting and amplifying a frequency of a transmission signal, and an RF receiver for low-noise amplifying and down-converting a frequency of a reception signal. However, this is only an example of the transceiver 1910, and components of the transceiver 1910 are not limited to the RF transmitter and the RF receiver. The transceiver 1910 may receive signals through a radio channel and output the same to the processor 1930, and may transmit signals output from the processor 1930 through the radio channel.

The memory 1920 may store programs and data necessary for the operation of the device. In addition, the memory 1920 may store control information or data included in signals acquired from the device. The memory 1920 may be a storage medium, such as a read-only memory (ROM), a random-access memory (RAM), a hard disk, a CD-ROM, or a DVD, or a combination of storage media.

The processor 1930 may control a series of processes so that the device operates as described above. For example, the transceiver 1910 may receive a data signal including a message transmitted from the user, and the processor 1930 may identify a result of the received data signal.

According to various embodiments of the disclosure, a BLER value may rapidly converge to a target BLER value for URLLC data. In addition, the efficiency of resource usage used to transmit the URLLC data is increased. Accordingly, in a situation in which a channel environment rapidly changes, a SINR value may be estimated to match the channel environment and data may be transmitted based an appropriate MCS, thereby improving the adaptive performance. In addition, a method and an apparatus according to embodiments of the disclosure are robust to the weight value for updating the correction constant for the SINR. Therefore, since the appropriate weight value may display the effective performance, there may be an effect of facilitating the application of the technology.

It should be appreciated that the embodiments and the terms used therein are not intended to limit the technological features set forth herein to particular embodiments and the disclosure includes various changes, equivalents, or alternatives for a corresponding embodiment. With regard to the description of the drawings, similar reference numerals may be used to designate similar or relevant elements. A singular form of a noun corresponding to an item may include one or more of the items, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. Such terms as "a first," "a second," "the first," and "the second" may be used to simply distinguish a corresponding element from another, and does not limit the elements in other aspect (e.g., importance or order). If an element (e.g., a first element) is referred to, with or without the term "operatively" or "communicatively", as "coupled with/to" or "connected with/to" another element (e.g., a second element), it means that the element may be coupled/connected with/to the other element directly (e.g., wiredly), wirelessly, or via a third element.

As used in various embodiments of the disclosure, the term "module" may include a unit implemented in hardware, software, or firmware, and may be interchangeably used with other terms, for example, "logic," "logic block," "component," or "circuit". The "module" may be a single integrated component, or a minimum unit or part thereof, adapted to perform one or more functions. For example, according to an embodiment, the "module" may be implemented in the form of an application-specific integrated circuit (ASIC).

Various embodiments as set forth herein may be implemented as software (e.g., the program 140) including one or more instructions that are stored in a storage medium (e.g., the internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it. This allows the machine to be operated to perform at least one function according to the at least one instruction invoked. The one or more instructions may include codes generated by a compiler or codes executable by an interpreter. The machine-readable storage medium may be provided in the form of a non-transitory storage medium. Herein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, methods according to various embodiments of the disclosure may be included and provided in a computer program product. The computer program product may be traded as a product between a seller and a purchaser. The computer program product may be distributed in the form of a machine-readable storage medium (e.g., compact disc read only memory (CD-ROM)), or be distributed (e.g., downloaded or uploaded) online via an application store (e.g., Play Store TM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each element (e.g., a module or a program) of the above-described elements may include a single entity or multiple entities, and some of the multiple entities may be separately disposed in any other element. According to various embodiments, one or more of the above-described elements or operations may be omitted, or one or more other elements or operations may be added. Alternatively or additionally, a plurality of elements (e.g., modules or programs) may be integrated into a single element. In such a case, according to various embodiments, the integrated element may still perform one or more functions of each of the plurality of elements in the same or similar manner as they are performed by a corresponding one of the plurality of elements before the integration. According to various embodiments, operations performed by the module, the program, or another element may be carried out sequentially, in parallel, repeatedly, or heuristically, or one or more of the operations may be executed in a different order or omitted, or one or more other operations may be added.

## Claims

1. A method performed by a base station in a wireless communication system, the method comprising:

     transmitting first URLLC data to a user equipment (UE), based on a first time resource and a first frequency resource;
     transmitting a padding signal to the UE, based on a second time resource and the first frequency resource;
     receiving a first hybrid automatic repeat request (HARQ) signal for the padding signal from the UE;
     generating a block error rate (BLER) value;
     generating a correction constant for a signal-to-interference-plus-noise ratio (SINR), based on the BLER value;
     correcting an outer loop rate control (OLRC) offset, based on the first HARQ signal;
     correcting the SINR, based on the corrected OLRC offset and the correction constant; and
     based on a modulation and coding scheme (MCS) determined based on the corrected SINR, transmitting second URLLC data to the UE, based on a third time resource and the first frequency resource.

2. The method of claim 1, wherein the second time resource comprises a plurality of periodically configured time resources, and the second time resource is a time resource allocated after the first time resource,

     wherein the third time resource is a time resource allocated after the second time resource; and
     wherein the first HARQ signal is based on the padding signal for a last time resource among the plurality of time resources included in the second time resource.

3. The method of claim 1, wherein the generating of the correction constant, based on the BLER value, comprises generating the correction constant, based on a difference between the BLER value and a target BLER value.

4. The method of claim 3, wherein the generating of the BLER value comprises generating the BLER value, based on all NACK signals received between a time point at which a channel quality indicator (CQI) is received from the UE and a time point at which the second URLLC data is transmitted.

5. The method of claim 4, wherein the generating of the BLER value comprises generating the BLER value, based on at least one of an NACK signal for the first URLLC data and an NACK signal for the padding signal.

6. The method of claim 4, wherein the generating of the correction constant comprises generating the correction constant, based on a weight applied to the difference between the BLER value and the target BLER value,

   wherein the correction constant increases as the BLER value increases, and
   wherein the corrected SINR decreases as the correction constant increases.

7. The method of claim 3, wherein the generating of the block error rate (BLER) value comprises generating the BLER value, based on NACK signals for transport blocks falling within a specific range among transport blocks transmitted between a time point at which a channel quality indicator (CQI) is received from the UE and a time point at which the second URLLC data is transmitted,

   wherein the specific range is determined based on a number or a time of initial transmissions for transport blocks, and
   wherein the BLER value is generated based on at least one of an NACK signal for the first URLLC data and an NACK signal for the padding signal.

8. The method of claim 7, wherein the generating of the correction constant, based on the BLER value, comprise generating the correction constant, based on a weight applied to the difference between the BLER value and the target BLER value,

   wherein the correction constant increases as the BLER value increases, and
   wherein the corrected SINR decreases as the correction constant increases.

9. An apparatus as a base station in a wireless communication system, the apparatus comprising:

   a transceiver;
   a processor; and
   a memory,
   wherein the memory is configured to store instructions that, when executed by the processor, cause the base station to:

      transmit first URLLC data to a user equipment (UE), based on a first time resource and a first frequency resource;
      transmit a padding signal to the UE, based on a second time resource and the first frequency resource;
      receive a first hybrid automatic repeat request (HARQ) signal for the padding signal from the UE;
      generate a block error rate (BLER) value;
      generate a correction constant for a signal-to-interference-plus-noise ratio (SINR), based on the BLER value;
      correct an outer loop rate control (OLRC) offset, based on the first HARQ signal;
      correct the SINR, based on the corrected OLRC offset and the correction constant; and
      based on a modulation and coding scheme (MCS) determined based on the corrected SINR, transmit second URLLC data to the UE, based on a third time resource and the first frequency resource.

10. The apparatus of claim 9, wherein the second time resource comprises a plurality of periodically configured time resources, and the second time resource is a time resource allocated after the first time resource,

    wherein the third time resource is a time resource allocated after the second time resource; and
    wherein the first HARQ signal is based on the padding signal for a last time resource among the plurality of time resources included in the second time resource.

11. The apparatus of claim 9, wherein the memory further comprises an instruction that, when executed by the processor, causes the base station to generate the correction constant, based on a difference between the BLER value and a target BLER value.

12. The apparatus of claim 11, wherein the memory further comprises an instruction that, when executed by the processor, causes the base station to generate the BLER value. based on all NACK signals received between a time point at which a channel quality indicator (CQI) is received from the UE and a time point at which the second URLLC data is transmitted.

13. The apparatus of claim 12, wherein the memory further comprises an instruction that, when executed by the processor, causes the base station to:

generate the BLER value, based on at least one of an NACK signal for the first URLLC data and an NACK signal for the padding signal;
generate the correction constant, based on a weight applied to the difference between the BLER value and the target BLER value,
wherein the correction constant increases as the BLER value increases, and
wherein the corrected SINR decreases as the correction constant increases.

14. The apparatus of claim 11, wherein the memory further comprises an instruction that, when executed by the processor, causes the base station to generate the BLER value, based on NACK signals for transport blocks falling within a specific range among transport blocks transmitted between a time point at which a channel quality indicator (CQI) is received from the UE and a time point at which the second URLLC data is transmitted,

wherein the BLER value is generated based on at least one of an NACK signal for the first URLLC data and an NACK signal for the padding signal, and
wherein the specific range is determined based on a number or a time of initial transmissions for transport blocks.

15. The apparatus of claim 14, wherein the memory further comprises an instruction that, when executed by the processor, causes the base station to generate the correction constant, based on a weight applied to the difference between the BLER value and the target BLER value,

wherein the correction constant increases as the BLER value increases, and
wherein the corrected SINR decreases as the correction constant increases.

URLLC data

Time

FIG.1

FIG.2

```
          ┌100                              ┌200
    ┌──────────────┐                  ┌──────────────┐
    │ Base station │                  │      UE      │
    └──────────────┘                  └──────────────┘
```

| | |
|---|---|
| | Measure SINR — 302 |
| ← Report CQI — 304 | |
| Estimate SINR/determine MCS — 306 | |
| Configure data transport block — 308 | |
| Transmit URLLC data and padding signal → 310 | |
| | Block error check (CRC) — 312 |
| ← Transmit HARQ signal — 314 | |
| Calculate BLER — 316 | |
| Correct OLRC offset and calculate correction constant — 318 | |
| Correct SINR and determine MCS — 320 | |
| Configure data transport block — 322 | |
| Transmit data → 324 | |

# FIG.3

```
┌─────────────────────────────────────┐
│          MEASURE SINR                │──~ 402
└─────────────────────────────────────┘
                  │
                  ▼
┌─────────────────────────────────────┐
│  TRANSMIT CHANNEL QUALITY INDICATOR  │──~ 404
│       (CQI) TO BASE STATION          │
└─────────────────────────────────────┘
                  │
                  ▼
┌─────────────────────────────────────┐
│ RECEIVE FIRST URLLC DATA FROM BASE STATION │──~ 406
└─────────────────────────────────────┘
                  │
                  ▼
┌─────────────────────────────────────┐
│   CHECK ERRORS IN RECEIVED FIRST URLLC   │──~ 408
│   DATA AND TRANSMIT FIRST HARQ SIGNAL    │
└─────────────────────────────────────┘
                  │
                  ▼
┌─────────────────────────────────────┐
│  RECEIVE PADDING SIGNAL FROM BASE STATION │──~ 410
└─────────────────────────────────────┘
                  │
                  ▼
┌─────────────────────────────────────┐
│  CHECK ERRORS IN RECEIVED PADDING SIGNAL  │──~ 412
│   AND TRANSMIT SECOND HARQ SIGNAL        │
└─────────────────────────────────────┘
                  │
                  ▼
┌─────────────────────────────────────┐
│ RECEIVE SECOND URLLC DATA FROM BASE STATION │──~ 414
└─────────────────────────────────────┘
```

# FIG.4

RECEIVE CHANNEL QUALITY INDICATOR (CQI) FROM UE — 502

ESTIMATE SINR, BASED ON CQI, AND DETERMINE MCS — 504

TRANSMIT FIRST URLLC DATA TO UE — 506

RECEIVE FIRST HARQ SIGNAL FOR FIRST URLLC DATA — 508

TRANSMIT PADDING SIGNAL TO UE — 510

RECEIVE SECOND HARQ SIGNAL FOR PADDING SIGNAL — 512

CALCULATE BLER VALUE — 514

CALCULATE CORRECTION CONSTANT, BASED ON BLER VALUE — 516

CORRECT OUTER LOOP RATE CONTROL (OLRC) OFFSET, BASED ON SECOND HARQ SIGNAL — 518

CORRECT SIGNAL-TO-INTERFERENCE-PLUS-NOISE RATIO (SINR), BASED ON CORRECTED OLRC OFFSET AND CORRECTION CONSTANT — 520

TRANSMIT SECOND URLLC DATA TO UE, BASED ON MODULATION AND CODING SCHEME (MCS) DETERMINED BASED ON CORRECTED SNR — 522

FIG.5

TRANSMIT FIRST URLLC DATA TO UE, BASED ON FIRST TIME RESOURCES AND FIRST FREQUENCY RESOURCES ~602

TRANSMIT PADDING SIGNAL TO UE, BASED ON SECOND TIME RESOURCES AND FIRST FREQUENCY RESOURCES ~604

RECEIVE FIRST HYBRID AUTOMATIC REPEAT REQUEST (HARQ) SIGNAL FOR PADDING SIGNAL FROM UE ~606

CALCULATE BLOCK ERROR RATE (BLER) VALUE ~608

CALCULATE CORRECTION CONSTANT, BASED ON BLER VALUE ~610

CORRECT OUTER LOOP RATE CONTROL (OLRC) OFFSET, BASED ON FIRST HARQ SIGNAL ~612

CORRECT SIGNAL-TO-INTERFERENCE-PLUS-NOISE RATIO (SINR), BASED ON CORRECTED OLRC OFFSET AND CORRECTION CONSTANT ~614

TRANSMIT SECOND URLLC DATA TO UE, BASED ON THIRD TIME RESOURCES AND FIRST FREQUENCY RESOURCES ACCORDING TO MODULATION AND CODING SCHEME (MCS) DETERMINED BASED ON CORRECTED SINR ~616

FIG.6

FIG.7

New URLLC data

+1

$N$(URLLC) ⟋802

804-1⟍ NACK?

+1  Yes

$N$(NACK) ⟋804-2

BLER = $N$(NACK) / $N$(URLLC) ⟋806

α(t+1) = α(t) + f(BLER) ⟋808

# FIG.8

New URLLC data

NACK? ⟋902

Yes

+1 +1 +1

Idx(NACK) 생성

idx(NACK$_n$)

idx(NACK$_{n-1}$)

· · ·

idx(NACK$_1$) ⟋904

idx(NACK$_1$) > windowsize ⟋906

+1 -1 Yes

$N$(NACK) ⟋908

BLER = N(NACK) / windowsize ⟋910

$\alpha(t+1) = \alpha(t) + f(BLER)$ ⟋912

FIG.9

No dummy: Total URLLC BLER

FIG.10

No dummy: URLLC BLER

FIG.11

FIG.12

URLLC only update

FIG.13

FIG.14

FIG.15

FIG.16

FIG.17

FIG.18

1900

FIG.19

## INTERNATIONAL SEARCH REPORT

| International application No. |
| --- |
| **PCT/KR2024/009573** |

### A. CLASSIFICATION OF SUBJECT MATTER

**H04L 1/00**(2006.01)i; **H04W 72/512**(2023.01)i; **H04L 1/20**(2006.01)i; **H04L 1/1812**(2023.01)i; **H04B 17/336**(2015.01)i

According to International Patent Classification (IPC) or to both national classification and IPC

### B. FIELDS SEARCHED

Minimum documentation searched (classification system followed by classification symbols)

H04L 1/00(2006.01); H04L 1/20(2006.01); H04W 24/08(2009.01); H04W 24/10(2009.01); H04W 72/04(2009.01); H04W 76/10(2018.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: URLLC(ultra reliable low latency communication), 자원(resource), 패딩신호 (padding signal), HARQ(hybrid automatic repeat request), BLER(block error rate), 오프셋(offset), 보정(adjust)

### C. DOCUMENTS CONSIDERED TO BE RELEVANT

| Category* | Citation of document, with indication, where appropriate, of the relevant passages | Relevant to claim No. |
| --- | --- | --- |
| A | WO 2022-031140 A1 (SAMSUNG ELECTRONICS CO., LTD.) 10 February 2022 (2022-02-10)<br>See paragraphs [0011], [0088]-[0095], [0212] and [0505]. | 1-15 |
| A | PERALTA, Elena et al. Outer Loop Link Adaptation Enhancements for Ultra Reliable Low Latency Communications in 5G. 2022 IEEE 95th Vehicular Technology Conference: (VTC2022-Spring). 25 August 2022.<br>See section 2, figure 1. | 1-15 |
| A | WO 2023-048330 A1 (SAMSUNG ELECTRONICS CO., LTD.) 30 March 2023 (2023-03-30)<br>See paragraphs [0059]-[0116]; claims 1-12; and figures 3A-8. | 1-15 |
| A | US 2022-0095146 A1 (QUALCOMM INCORPORATED) 24 March 2022 (2022-03-24)<br>See claims 1-30. | 1-15 |
| A | WO 2018-064182 A1 (INTEL CORPORATION) 05 April 2018 (2018-04-05)<br>See claims 1-24. | 1-15 |

☐ Further documents are listed in the continuation of Box C.    ☑ See patent family annex.

| | |
| --- | --- |
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **25 October 2024** | **25 October 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.

**PCT/KR2024/009573**

| Patent document cited in search report | | | Publication date (day/month/year) | Patent family member(s) | | | Publication date (day/month/year) |
|---|---|---|---|---|---|---|---|
| WO | 2022-031140 | A1 | 10 February 2022 | KR | 10-2022-0018867 | A | 15 February 2022 |
| | | | | US | 2023-0188247 | A1 | 15 June 2023 |
| WO | 2023-048330 | A1 | 30 March 2023 | US | 2024-0187182 | A1 | 06 June 2024 |
| US | 2022-0095146 | A1 | 24 March 2022 | CN | 116018770 | A | 25 April 2023 |
| | | | | EP | 4218177 | A1 | 02 August 2023 |
| | | | | US | 11917442 | B2 | 27 February 2024 |
| | | | | US | 2024-0187906 | A1 | 06 June 2024 |
| | | | | WO | 2022-066887 | A1 | 31 March 2022 |
| WO | 2018-064182 | A1 | 05 April 2018 | | None | | |

Form PCT/ISA/210 (patent family annex) (July 2022)